# EUROPÄISCHE PATENTSCHRIFT

(11) **EP 2 531 650 B1**
(45) Veröffentlichungstag und Bekanntmachung des Hinweises auf die Patenterteilung: **31.08.2016**
(21) Anmeldenummer: 10798532.7
(22) Anmeldetag: 15.12.2010
(51) Int. Cl.: D21F 1/06, F16K 3/24, F16K 3/32, D21F 1/02

(54) **VENTIL ZUM REGULIEREN EINES FLUIDSTROMS**
VALVE FOR REGULATING A FLUID FLOW
SOUPAPE POUR LA RÉGULATION D'UN FLUX DE FLUIDE

(30) Priorität: 03.02.2010 DE 102010001557
(43) Veröffentlichungstag der Anmeldung: 12.12.2012
(73) Patentinhaber: Voith Patent GmbH, 89522 Heidenheim (DE)
(72) Erfinder: RUF, Wolfgang, 89542 Herbrechtingen (DE); FENKL, Konstantin, 89547 Gerstetten-Heldenfingen (DE); HÄUSSLER, Markus, 89542 Herbrechtingen (DE)
(86) Internationale Anmeldenummer: PCT/EP2010/069686
(87) Internationale Veröffentlichungsnummer: WO 2011/095250

(56) Entgegenhaltungen:
- DE-C1- 19 949 067

## Beschreibung

Die Erfindung betrifft ein Ventil zum Regulieren eines Fluidstroms, insbesondere eines vorzugsweise in einer Maschine zur Herstellung einer Faserstoffbahn, insbesondere einer Papier-, Karton- oder Verpackungspapierbahn, geführten Faserstoffsuspensionsstroms, umfassend einen Hohlkörper mit einem im Wesentlichen zumindest streckenweise rotationssymmetrischen und eine Längsachse aufweisenden Hohlraum, der zumindest eine, eine Längsachse aufweisende Einlassöffnung mit einem Einlasskanal, eine veränderbare und im Wesentlichen rotationssymmetrische Durchtrittsfläche und eine Auslassöffnung mit einem Auslasskanal aufweist, und eine vorzugsweise mittels wenigstens eines Betätigungsmittels koaxial in dem Hohlraum des Hohlkörpers verschiebbare, die Durchtrittsfläche infolge einer Verschiebung veränderbare, insbesondere ein Ventilteller aufweisende und vorzugsweise rotationssymmetrische Ventilstange.

Ein derartiges Ventil für eine Flüssigkeit ist beispielsweise aus der Druckschrift EP 0 633 416 A1 bekannt. Bei der Flüssigkeit handelt es sich um eine Stoffsuspension, welche einem Stoffauflauf einer Papiermaschine zuführbar ist.

Dieses Ventil besitzt in dem Hohlkörper eine Strömungshauptrichtung für die Flüssigkeit, die im Wesentlichen koaxial mit der Längsachse des Hohlraums des Hohlkörpers verläuft. Zusätzlich ist eine Flüssigkeitszuführung zur Durchtrittsfläche derart vorgesehen, dass der Flüssigkeit bezogen auf die Strömungshauptrichtung eine Rotationskomponente um die Strömungshauptrichtung zugefügt ist. Dadurch kann die Verstopfungsneigung dieses Ventils reduziert werden. Ein Nachteil dieses Ventils bei einer zu kleinen Dimensionierung der einen Stößel aufweisenden Ventilstange kann jedoch eine Umkehrung der beabsichtigten positiven Wirkung, das heißt der Reduzierung der Verstopfungsneigung sein. Denn es hat sich gezeigt, dass sich bei einer zu kleinen Dimensionierung der Ventilstange trotz bestehender Rotationskomponente in der Flüssigkeit Fasergespinste oder Faserringe um den Stößel der Ventilstange bilden können.

Weiterhin können zum Regulieren eines Fluidstroms, insbesondere eines vorzugsweise in einer Maschine zur Herstellung einer Faserstoffbahn, insbesondere einer Papier-, Karton- oder Verpackungspapierbahn, geführten Faserstoffsuspensionsstroms auch aus dem älteren Stand der Technik bekannte Kugelhähne, Schieber, Regelklappen, Membranventile, Quetschventile, Nadelventile oder dergleichen eingesetzt werden. Die Bauelemente neigen jedoch sehr häufig zu lokalen Faseranhäufungen, Faserwischbildungen und Ablagerungen. Hierdurch kann es zu Verstopfungen des Ventils kommen oder, wenn sich die Faserwische lösen, zu Formationsstörungen in der hergestellten Faserstoffbahn kommen. Zudem sind die Regelspalte bei kleinen Mengen ungeeignet, da sie oft sichelförmig ausgebildet sind und/oder Scherkanten aufweisen, an denen sich Fasern einklemmen. Ferner weisen sie Strömungstoträume und Strömungsstaupunkte, gegebenenfalls auch Stromteilungen mit scharfen Teilungskonturen, an denen sich möglicherweise in dem Fluidstrom befindliche Feststoffe ablagern können, auf. Auch werden an diese Bauelemente relativ hohe Anforderungen hinsichtlich Regelbarkeit und niedriger Druckverlust gestellt.

Somit wurden in der Vergangenheit vermehrt Anstrengungen unternommen, solche Ventile zu entwickeln, die die soeben genannten Eigenschaften erfüllen und die eine möglichst geringe Neigung zu einer Faserwischbildung oder zu Anlagerungen der in dem Fluidstrom, insbesondere Faserstoffsuspensionsstrom befindlichen Feststoffe aufweisen. Ein Ergebnis dieser Anstrengungen ist beispielsweise das in der bereits genannten Druckschrift EP 0 633 416 A1 offenbarte Ventil für eine Flüssigkeit.

Bei weiteren Untersuchungen dieses Ventils für eine Flüssigkeit wurde nun in Erfahrung gebracht, dass die Rotationskomponente von Nachteil ist, da sie einen erhöhten Druckverlust in dem Fluidstrom, insbesondere Faserstoffsuspensionsstrom erzeugt. Und just dieser erhöhte Druckverlust in dem Ventil führt in bekannter Weise zu höheren Betriebskosten.

Ein weiteres Ventil zum Regulieren eines Suspensionsstromes an Papiermaschinen ist aus dem Dokument DE 19949067 C1 bekannt. Dieses Ventil eignet sich besonders für Suspensionen mit langen Textil-oder Kunststofffasern.

Es ist also Aufgabe der Erfindung, ein Ventil der eingangs genannten Art derart zu verbessern, dass die genannten Nachteile des Stands der Technik weitestgehend reduziert, vorzugsweise sogar gänzlich vermieden werden. Insbesondere sollen der Druckverlust in dem Fluidstrom, insbesondere Faserstoffsuspensionsstrom möglichst gering sein und lokale Faseranhäufungen, Faserwischbildungen, Ablagerungen und dergleichen weitestgehend, vorzugsweise gänzlich vermieden werden.

Diese Aufgabe wird bei einem Ventil der eingangs genannten Art erfindungsgemäß dadurch gelöst, dass die vorzugweise rotationssymmetrische Ventilstange mittels eines eine Führungsöffnung, insbesondere Führungsbohrung aufweisenden Nockens in den Hohlraum des Hohlkörpers hineingeführt ist.

Die erfindungsgemäße Aufgabe wird auf diese Weise vollkommen gelöst.

Die erfindungsgemäße Anordnung der beiden Längsachsen, der Längsachse der Einlassöffnung und der Längsachse des Hohlraums des Hohlkörpers, bewirkt eine rotationsfreie, staupunktfreie und kavitationsfreie Führung des Fluidstroms, insbesondere Faserstoffsuspensionsstroms mit einem möglichst geringen Druckverlust in dem Fluidstrom, insbesondere Faserstoffsuspensionsstrom. Der Hohlraum des Hohlkörpers erfährt also eine mittige und staupunktsfreie Durchströmung ohne jegliche Drallströmung.

Die Längsachse der Einlassöffnung ist hierbei definitionsgemäß die Mittensenkrechte der Einlassöffnung. Zudem weist das erfindungsgemäße Ventil bevorzugt nur eine, eine Längsachse aufweisende Einlassöffnung mit einem in Strömungsrichtung vorgeordneten Einlasskanal auf, dessen Längsachse wiederum koaxial oder unter einem Winkel zu der Längsachse der Einlassöffnung angeordnet sein kann. Das erfindungsgemäße Ventil besitzt in dem Hohlkörper eine Strömungshauptrichtung für den Fluidstrom, insbesondere Faserstoffsuspensionsstrom, die im Wesentlichen koaxial mit der Längsachse des Hohlraums des Hohlkörpers verläuft.

Die beiden sich in dem Schnittpunkt schneidenden Längsachsen, namentlich die Längsachse der Einlassöffnung und die Längsachse des Hohlraums des Hohlkörpers, weisen bevorzugt einen Schnittwinkel im Bereich von 60 bis 120°, vorzugsweise von 80 bis 100°, insbesondere von 85 bis 95° auf. Die Längsachse der Einlassöffnung kann also konvergent zu der Strömungshauptrichtung des Fluidstroms in dem Hohlkörper (Schnittwinkel > 90°), senkrecht zu der Strömungshauptrichtung des Fluidstroms in dem Hohlkörper (Schnittwinkel = 90°) oder divergent zu der Strömungshauptrichtung des Fluidstroms in dem Hohlkörper (Schnittwinkel < 90°) ausgerichtet sein. Diese Schnittwinkelbereiche erbringen räumliche Vorteile, insbesondere im Hinblick auf die unmittelbare Aneinanderreihung von mehreren erfindungsgemäßen Ventilen und/oder die Anordnung mit weiteren Bauteilen und -gruppen, wie zum Beispiel mit der Verteileinrichtung, insbesondere dem Querverteilrohr.

Weiterhin ist es im Hinblick auf einen geringen Druckverlust in dem Fluidstrom, insbesondere Faserstoffsuspensionsstrom von Vorteil, wenn zumindest der Hohlraum des Hohlkörpers frei von senkrecht zu der Strömungshauptrichtung des Fluidstroms, insbesondere Faserstoffsuspensionsstroms liegenden Flächen und/oder Kanten ist.

Der in den Hohlraum des Hohlkörpers zumindest bereichsweise hineinragende Nocken ist bevorzugt derart dimensioniert und angeordnet, dass er den vorhandenen örtlichen offenen Strömungsquerschnitt im Vergleich mit dem theoretischen örtlichen offenen Strömungsquerschnitt um maximal 60 %, vorzugsweise um maximal 50 %, insbesondere um maximal 40 % verkleinert.

Ferner weist der in den Hohlraum des Hohlkörpers zumindest bereichsweise hineinragende Nocken bevorzugt mehrere vorzugsweise planare Anströmflächen auf, die nicht senkrecht zu der Strömungsrichtung des Fluidstroms, insbesondere Faserstoffsuspensionsstroms ausgerichtet sind und/oder die zumindest bereichsweise mit Fasen und/oder Radien versehen sind. Denn eine Stromteilung mit kanten- und/oder schneidenartigen Geometrien führt in bekannter Weise zu Faseranhängen. Die einlassseitige Anströmfläche des Nockens kann auch parallel zu der Längsachse des Hohlraums des Hohlkörpers sein, wenn die Geometrie der Strömungsführung schon eine Strömungsausrichtung in Richtung Längsachse des Hohlraums des Hohlkörpers, also in Austrittsrichtung vorgibt. Selbstverständlich kann das Nockendesign auch als einfache Schräge, als Hohlzylinder oder als Hohlkegel ausgeführt sein.

Auch weist der in den Hohlraum des Hohlkörpers zumindest bereichsweise hineinragende Nocken bevorzugt eine Nockenbreite im Bereich von 20 bis 80 %, vorzugsweise von 25 bis 70 %, insbesondere von 30 bis 60 % der vorhandenen örtlichen Strömungsbreite des Fluidstroms, insbesondere Faserstoffsuspensionsstroms auf, um einen Bauraum für die notwendige Verwendung einer ausreichend stabilen Ventilstange zu erhalten.

Weiterhin weisen die in Strömungsrichtung des Fluidstroms, insbesondere Faserstoffsuspensionsstroms geordneten Bereiche des Hohlraums des Hohlkörpers bevorzugt zumindest eine der folgenden Eigenschaften auf:
- die eine Längsachse aufweisende Einlassöffnung weist einen Durchmesser im Bereich von 10 bis 60 mm, vorzugsweise von 15 bis 50 mm, auf;
- ein Übergangsbereich weist einen Übergangswinkel im Bereich von 60 bis 120°, vorzugsweise von 80 bis 100°, insbesondere von 85 bis 95° auf;
- ein zylindrischer oder annähernd zylindrischer Bereich weist einen Durchmesser im Bereich von 10 bis 60 mm, vorzugsweise von 15 bis 50 mm, und eine Länge im Bereich von 0,1 bis 50 mm, vorzugsweise von 0,1 bis 20 mm, (bzw. 0,5 bis 1,5, vorzugsweise 0,8 bis 1,2, · Durchmesser) auf;
- die veränderbare und im Wesentlichen rotationssymmetrische Durchtrittsfläche ist ein Konfusor, der eine Länge im Bereich von 10 bis 100 mm, vorzugsweise von 20 bis 50 mm, und einen Winkel von 60 bis 90°, vorzugsweise von 70 bis 80°, aufweist;
- der Endbereich des Konfusors und ein zylindrischer oder annähernd zylindrischer Bereich weisen einen Durchmesser im Bereich von 5 bis 30 mm, vorzugsweise von 10 bis 20 mm, auf, wobei der zylindrische oder annähernd zylindrische Bereich zudem einen Länge von 0,1 bis 50 mm, vorzugsweise von 2 bis 20 mm, (bzw. 0,2 bis 0,8, vorzugweise 0,5 bis 0,7, · Durchmesser) aufweist; und/oder
- ein Diffusor weist eine Länge im Bereich von 10 bis 100 mm, vorzugsweise von 20 bis 50 mm, und einem Winkel von 60 bis 90°, vorzugsweise von 70 bis 80°, auf.

Zudem weist der Ventilteller der vorzugsweise rotationssymmetrischen Ventilstange einen kleineren Durchmesser als der Endbereich des Konfusors und des zylindrischen oder annähernd zylindrischen Bereichs auf, so dass eine variable Drossel ausgebildet wird, die fortwährend einen Mindestspalt im Bereich von 0,1 bis 3,0 mm, vorzugsweise von 0,2 bis 1,0 mm, aufweist und damit im Betrieb des erfindungsgemäßen Ventils immer einen Mindestvolumenstrom besitzt. Hierdurch lässt sich das vorteilhafte Funktionsprinzip einer Drossel realisieren. Der Ventilteller kann im Prinzip jede beliebige Außenkontur aufweisen, beispielsweise eine dem Fachmann bekannte Außenkontur oder jede mögliche, insbesondere konische Außenkontur.

Auch ist der in den Hohlraum des Hohlkörpers zumindest bereichsweise hineinragende Bereich der vorzugsweise rotationssymmetrischen Ventilstange bevorzugt frei von senkrecht zu der Strömungshauptrichtung des Fluidstroms, insbesondere Faserstoffsuspensionsstroms liegenden Flächen und/oder Kanten. Dies ist wiederum im Hinblick auf einen geringen Druckverlust in dem Fluidstrom, insbesondere Faserstoffsuspensionsstrom von Vorteil.

Und damit die Strömungsführung prozesstechnisch optimal und mit einem reduzierten Druckverlust in dem Fluidstrom, insbesondere Faserstoffsuspensionsstrom realisiert werden kann, weist der in den Hohlraum des Hohlkörpers zumindest bereichsweise hineinragende Bereich der vorzugsweise rotationssymmetrischen Ventilstange bevorzugt mehrere Bereiche mit unterschiedlichen konstanten, konvergierenden oder divergierenden Außenkonturen auf.

Ferner ist der zu regulierende Fluidstrom, insbesondere Fluidteilstrom bevorzugt ein Verdünnungswasser-Strom bzw. Siebwasser-Strom, der Anteile an Feststoffen einer Faserstoffsuspension enthält.

Das erfindungsgemäße Ventil lässt sich in hervorragender Weise auch in einem Stoffauflauf für eine Maschine zur Herstellung einer Faserstoffbahn, insbesondere einer Papier-, Karton- oder Verpackungspapierbahn, aus wenigstens einer Faserstoffsuspension verwenden. Der Stoffauflauf kann hierbei als ein sektionierter Verdünnungswasser-Stoffauflauf mit einer Teilungsbreite von N · 25 mm oder N · 33,3 mm ausgebildet sein, wobei N eine natürliche Zahl ist, und in mindestens einer, vorzugsweise in jeder Verdünnungswasser-Leitung kann wenigstens ein erfindungsgemäßes Ventil angeordnet sein.

Auch lässt sich das erfindungsgemäße Ventil in hervorragender Weise in einer Maschine zur Herstellung einer Faserstoffbahn, insbesondere einer Papier-, Karton- oder Verpackungspapierbahn, aus wenigstens einer Faserstoffsuspension, verwenden. Die Maschine kann gemäß dem Stand der Technik aufgebaut sein und alle bekannten Maschinenbereiche aufweisen. Weitere Merkmale und Vorteile der Erfindung ergeben sich aus der nachfolgenden Beschreibung mehrerer bevorzugter Ausführungsbeispiele unter Bezugnahme auf die Zeichnung.

Es zeigen
- Figur 1: eine schematische Schnittdarstellung durch ein erfindungsgemäßes Ventil zum Regulieren eines Fluidstroms, insbesondere eines Faserstoffsuspensionsstroms;
- Figur 2: eine schematische Seitenansicht auf das erfindungsgemäße Ventil gemäß dem Ansichtspfeil P der Figur 1;
- Figur 3: eine schematische und teilweise Längsschnittdarstellung des erfindungsgemäßen Ventils der Figur 1;
- Figur 4: eine schematische Perspektivdarstellung eines unteren Bereichs eines Nockens des erfindungsgemäßen Ventils der Figur 1;
- Figur 5: eine schematische Perspektivdarstellung eines unteren Bereichs einer alternativen Ausführungsform des Nockens für das erfindungsgemäße Ventil;
- Figur 6: eine schematische Perspektivdarstellung eines unteren Bereichs einer weiteren alternativen Ausführungsform des Nockens für das erfindungsgemäße Ventil;
- Figur 7a: eine schematische Perspektivdarstellung eines unteren Bereichs einer dritten alternativen Ausführungsform des Nockens für das erfindungsgemäße Ventil;
- Figuren 7b und 7c: zwei schematische Seitenansichten der dritten alternativen Ausführungsform des Nockens für das erfindungsgemäße Ventil; und
- Figur 8: eine schematische Schnittdarstellung durch einen bekannten sektionierten Verdünnungswasser-Stoffauflauf, der wenigstens ein erfindungsgemäßes Ventil umfasst.

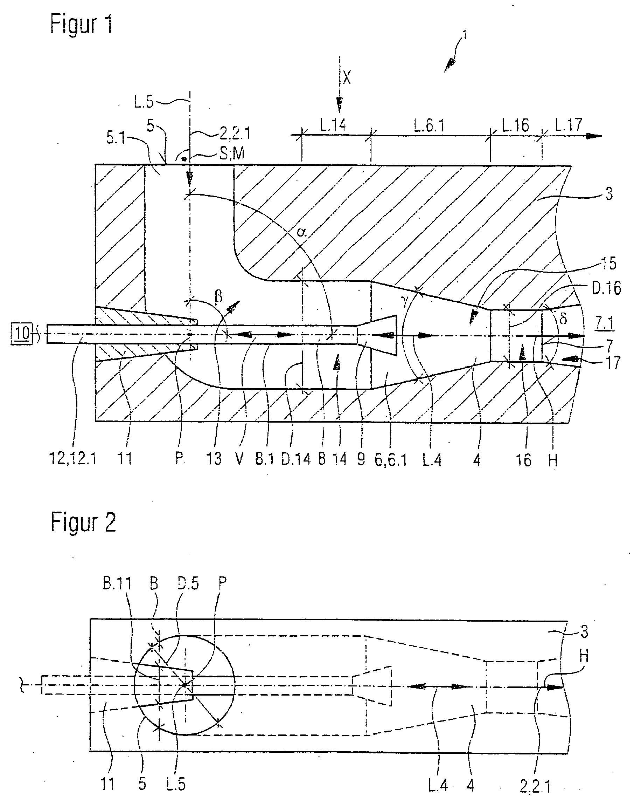

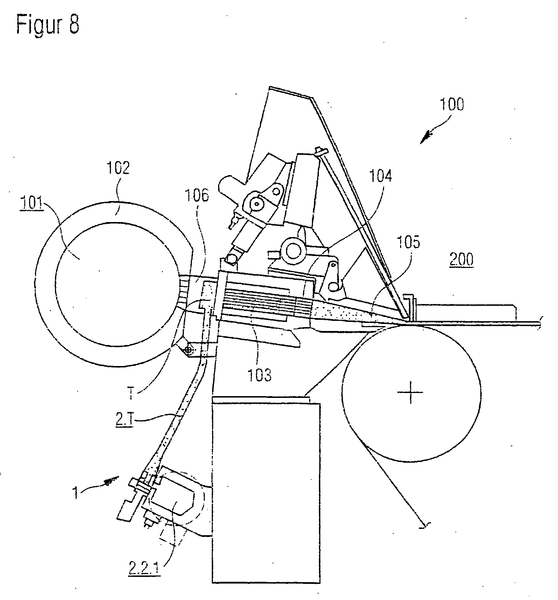

Die Figur 1 zeigt eine schematische Schnittdarstellung durch ein erfindungsgemäßes Ventil 1 zum Regulieren eines Fluidstroms 2 (Pfeil), insbesondere eines Faserstoffsuspensionsstroms 2.1 (Pfeil). Der Faserstoffsuspensionsstrom 2.1 kann beispielsweise in einer dem Fachmann bekannten Maschine 200 zur Herstellung einer Faserstoffbahn, insbesondere einer Papier-, Karton- oder Verpackungspapierbahn geführt sein (vgl. Figur 8).

Das erfindungsgemäße Ventil 1 umfasst einen Hohlkörper 3 mit einem im Wesentlichen zumindest streckenweise rotationssymmetrischen und eine Längsachse L.4 (gestrichelte Linie; Doppelpfeil) aufweisenden Hohlraum 4, der zumindest eine, eine Längsachse L.5 (gestrichelte Linie) aufweisende Einlassöffnung 5, eine veränderbare und im Wesentlichen rotationssymmetrische Durchtrittsfläche 6 und eine Auslassöffnung 7 aufweist.

Der Einlassöffnung 5 ist ein nicht weiters dargestellter Einlasskanal 5.1 in Strömungsrichtung S (Pfeil) des Fluidstroms 2 vorgeordnet. Hingegen ist der Auslassöffnung 7 ein nicht weiters dargestellter Auslasskanal 7.1 in Strömungshauptrichtung H (Pfeil) des Fluidstroms 2 nachgeordnet.

Das erfindungsgemäße Ventil 1 umfasst weiterhin eine vorzugsweise mittels wenigstens eines nicht näher dargestellten Betätigungsmittels 10 koaxial in dem Hohlraum 4 des Hohlkörpers 3 verschiebbare, die Durchtrittsfläche 6 infolge einer Verschiebung V (Doppelpfeil) veränderbare, vorzugsweise ein Ventilteller 9 aufweisende und vorzugsweise rotationssymmetrische Ventilstange 8.

Es ist nun erfindungsgemäß vorgesehen, dass die Einlassöffnung 5 in dem Hohlkörper 3 derart angeordnet ist, dass deren Längsachse L.5 (gestrichelte Linie) sich mit der Längsachse L.4 (gestrichelte Linie; Doppelpfeil) des Hohlraums 4 des Hohlkörpers 3 in einem Schnittpunkt P schneidet, und dass der Hohlraum 4 des Hohlkörpers 3 derart ausgebildet ist, dass der eine Strömungshauptrichtung H (Pfeil) aufweisende Fluidstrom 2, insbesondere Faserstoffsuspensionsstrom 2.1 staupunktsfrei oder annähernd staupunktsfrei und rotationsfrei oder annähernd rotationsfrei in Bezug auf die Längsachse L.4 (gestrichelte Linie; Doppelpfeil) des Hohlraums 4 durch ihn strömt.

Die Längsachse L.5 der Einlassöffnung 5 ist hierbei definitionsgemäß die Mittensenkrechte M der Einlassöffnung 5.

Die erfindungsgemäße Anordnung der beiden Längsachsen, der Längsachse L.5 der Einlassöffnung 5 und der Längsachse L.4 des Hohlraums 4 des Hohlkörpers 3, bewirkt eine rotationsfreie, staupunktfreie und kavitationsfreie Führung des Fluidstroms 2, insbesondere Faserstoffsuspensionsstroms 2.1 mit einem möglichst geringen Druckverlust in dem Fluidstrom 2, insbesondere Faserstoffsuspensionsstrom 2.1. Der Hohlraum 4 des Hohlkörpers 3 erfährt also eine mittige und staupunktsfreie Durchströmung ohne jegliche Drallströmung.

Ferner ist in der Figur 1 erkennbar, dass das erfindungsgemäße Ventil 1 nur eine, eine Längsachse L.5 (gestrichelte Linie) aufweisende Einlassöffnung 5 mit einem nicht weiters dargestellten Einlasskanal 5.1 aufweist.

Die beiden sich in dem Schnittpunkt P schneidenden Längsachsen L.4 (gestrichelte Linie; Doppelpfeil), L.5 (gestrichelte Linie) weisen einen Schnittwinkel α im Bereich von 60 bis 120°, vorzugsweise von 80 bis 100°, insbesondere von 85 bis 95° auf. Die Längsachse L.5 (gestrichelte Linie) der Einlassöffnung 5 kann also konvergent zu der Strömungshauptrichtung H (Pfeil) des Fluidstroms 2 in dem Hohlkörper 3 (Schnittwinkel α > 90°), senkrecht zu der Strömungshauptrichtung H (Pfeil) des Fluidstroms 2 in dem Hohlkörper 3 (Schnittwinkel α=90°) oder divergent zu der Strömungshauptrichtung H (Pfeil) des Fluidstroms 2 in dem Hohlkörper 3 (Schnittwinkel α < 90°) ausgerichtet sein. In der dargestellten Ausführung nimmt der Schnittwinkel α einen Wert von 90° an, die beiden sich schneidenden Längsachsen L.4 (gestrichelte Linie; Doppelpfeil), L.5 (gestrichelte Linie) verlaufen also senkrecht zueinander.

Weiterhin ist zumindest der Hohlraum 4 des Hohlkörpers 3 frei von senkrecht zu der Strömungshauptrichtung H (Pfeil) des Fluidstroms 2, insbesondere Faserstoffsuspensionsstroms 2.1 liegenden Flächen und/oder Kanten. Auch ist der in den Hohlraum 4 des Hohlkörpers 3 zumindest bereichsweise hineinragende Bereich 8.1 der vorzugsweise rotationssymmetrischen Ventilstange 8 frei von senkrecht zu der Strömungshauptrichtung H (Pfeil) des Fluidstroms 2, insbesondere Faserstoffsuspensionsstroms 2.1 liegenden Flächen und/oder Kanten.

Die vorzugsweise rotationssymmetrische Ventilstange 8 selbst ist mittels eines eine Führungsöffnung 12, insbesondere Führungsbohrung 12.1 aufweisenden und lediglich schematisch dargestellten Nockens 11 in den Hohlraum 4 des Hohlkörpers 3 hineingeführt. Der Nocken 11 ist ortsfest in dem Hohlkörper 3 gelagert.

Die in Strömungsrichtung S (Pfeil) bzw. Strömungshauptrichtung H (Pfeil) des Fluidstroms 2, insbesondere Faserstoffsuspensionsstroms 2.1 geordneten Bereiche des Hohlraums 4 des Hohlkörpers 3 weisen folgende Eigenschaften auf:
- die eine Längsachse L.5 aufweisende Einlassöffnung 5 weist einen Durchmesser D.5 (vgl. Figur 2) im Bereich von 10 bis 60 mm, vorzugsweise von 15 bis 50 mm, auf;
- ein Übergangsbereich 13 weist einen Übergangswinkel β im Bereich von 60 bis 120°, vorzugsweise von 80 bis 100°, insbesondere von 85 bis 95° auf;
- ein zylindrischer oder annähernd zylindrischer Bereich 14 weist einen Durchmesser D.14 im Bereich von 10 bis 60 mm, vorzugsweise von 15 bis 50 mm, und eine Länge L.14 im Bereich von 0,1 bis 50 mm, vorzugsweise von 0,1 bis 20 mm, (bzw. 0,5 bis 1,5, vorzugsweise 0,8 bis 1,2, · Durchmesser D.14) auf;
- die veränderbare und im Wesentlichen rotationssymmetrische Durchtrittsfläche 6 ist ein Konfusor 6.1, der eine Länge L.6.1 im Bereich von 10 bis 100 mm, vorzugsweise von 20 bis 50 mm, und einen Winkel γ von 60 bis 90°, vorzugsweise von 70 bis 80°, aufweist;
- der Endbereich 15 des Konfusors 6.1 und ein zylindrischer oder annähernd zylindrischer Bereich 16 weisen einen Durchmesser D.16 im Bereich von 5 bis 30 mm, vorzugsweise von 10 bis 20 mm, auf, wobei der zylindrische oder annähernd zylindrische Bereich 16 zudem einen Länge L.16 von 0,1 bis 50 mm, vorzugsweise von 2 bis 20 mm, (bzw. 0,2 bis 0,8, vorzugweise 0,5 bis 0,7, · Durchmesser D.16) aufweist; und/oder
- ein Diffusor 17 weist eine Länge L.17 im Bereich von 10 bis 100 mm, vorzugsweise von 20 bis 50 mm, und einem Winkel δ von 60 bis 90°, vorzugsweise von 70 bis 80°, auf.

Der Fluidstrom 2 (Pfeil) ist außerhalb des Nockens 11 vorzugsweise mit dem Radius von 0,5 bis 5, vorzugsweise von 1 bis 2,5, · dem Durchmesser D.5 der Einlauföffnung 5 geführt.

Die Figur 2 zeigt eine schematische Seitenansicht auf das erfindungsgemäße Ventil 1 gemäß dem Ansichtspfeil X der Figur 1.

Auch in dieser Seitenansicht ist erkennbar, dass die Einlassöffnung 5 in dem Hohlkörper 3 derart angeordnet ist, dass deren Längsachse L.5 (Punkt) sich mit der Längsachse L.4 (gestrichelte Linie; Doppelpfeil) des Hohlraums 4 des Hohlkörpers 3 in einem Schnittpunkt P schneidet, und dass der Hohlraum 4 des Hohlkörpers 3 derart ausgebildet ist, dass der eine Strömungshauptrichtung H (Pfeil) aufweisende Fluidstrom 2, insbesondere Faserstoffsuspensionsstrom 2.1 staupunktsfrei oder annähernd staupunktsfrei und rotationsfrei oder annähernd rotationsfrei in Bezug auf die Längsachse L.4 des Hohlraums 4 durch ihn strömt.

Die Längsachse L.5 der Einlassöffnung 5 ist hierbei definitionsgemäß die Mittensenkrechte M der Einlassöffnung 5 (vgl. Figur 1 ).

Der in den Hohlraum 4 des Hohlkörpers 3 zumindest bereichsweise hineinragende Nocken 11 weist eine Nockenbreite B.11 im Bereich von 20 bis 80 %, vorzugsweise von 25 bis 70 %, insbesondere von 30 bis 60 % der vorhandenen örtlichen Strömungsbreite B des Fluidstroms 2, insbesondere Faserstoffsuspensionsstroms 2.1 auf.

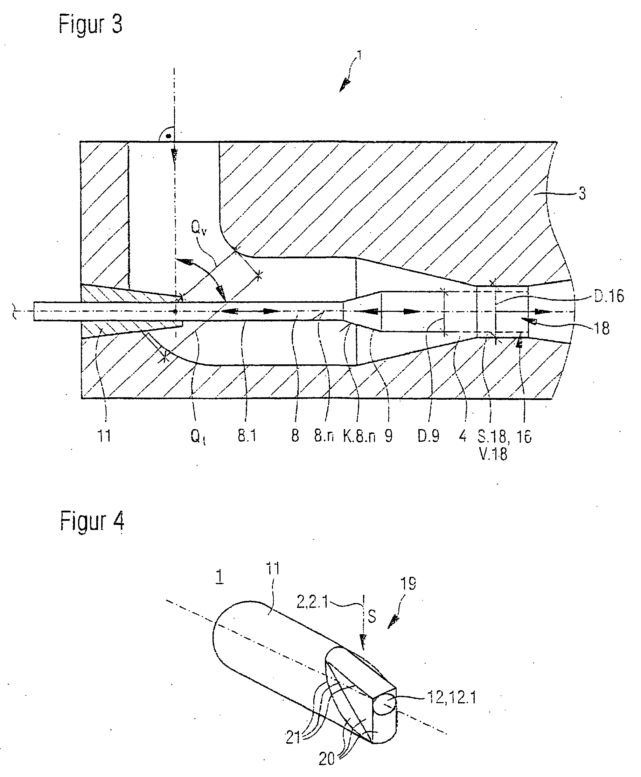

Die Figur 3 zeigt eine schematische und teilweise Längsschnittdarstellung des erfindungsgemäßen Ventils 1 der Figur 1.

Der in den Hohlraum 4 des Hohlkörpers 3 zumindest bereichsweise hineinragende Nocken 11 ist derart dimensioniert und angeordnet, dass er den vorhandenen örtlichen offenen Strömungsquerschnitt Qᵥ im Vergleich mit dem theoretischen örtlichen offenen Strömungsquerschnitt Qₜ um maximal 60 %, vorzugsweise um maximal 50 %, insbesondere um maximal 40 % verkleinert. Der theoretische örtliche offene Strömungsquerschnitt Qₜ ist hierbei definitionsgemäß der offene Strömungsquerschnitt ohne Nocken.

Weiterhin weist der in den Hohlraum 4 des Hohlkörpers 3 zumindest bereichsweise hineinragende Bereich 8.1 der vorzugsweise rotationssymmetrischen Ventilstange 8 mehrere Bereiche 8.n mit unterschiedlichen konstanten, konvergierenden oder divergierenden Außenkonturen K.8.n auf.

Auch weist der Ventilteller 9 der vorzugsweise rotationssymmetrischen Ventilstange 8 einen kleineren Durchmesser D.9 als der Endbereich 15 des Konfusors 6.1 und des zylindrischen oder annähernd zylindrischen Bereichs 16 (Durchmesser D.16) auf, so dass eine variable Drossel 18 ausgebildet wird, die fortwährend einen Mindestspalt S.18 im Bereich von 0,5 bis 1,5 mm, vorzugsweise von 0,5 bis 1,0 mm, insbesondere von etwa 0,75 mm aufweist und damit im Betrieb des erfindungsgemäßen Ventils 1 immer einen Mindestvolumenstrom V.18 besitzt.

Die Figur 4 zeigt eine schematische Perspektivdarstellung eines unteren Bereichs 19 eines Nockens 11 des erfindungsgemäßen Ventils 1 der Figur 1.

Der Nocken 11 besitzt zentral die Führungsöffnung 12, insbesondere Führungsbohrung 12.1. Außenseitig weist der in den Hohlraum 4 des Hohlkörpers 3 zumindest bereichsweise hineinragende und ortsfest in dem Hohlkörper 3 gelagerte Nocken 11 (vgl. Figuren 1 bis 3) mehrere vorzugsweise planare Anströmflächen 20 auf, die gegebenenfalls mittels Rundungen und/oder Fasen 21 ineinander über gehen können. Die vorzugsweise planaren Anströmflächen 20 sind nicht senkrecht zu der Strömungsrichtung S (Pfeil) des Fluidstroms 2 (Pfeil), insbesondere Faserstoffsuspensionsstroms 2.1 (Pfeil) ausgerichtet.

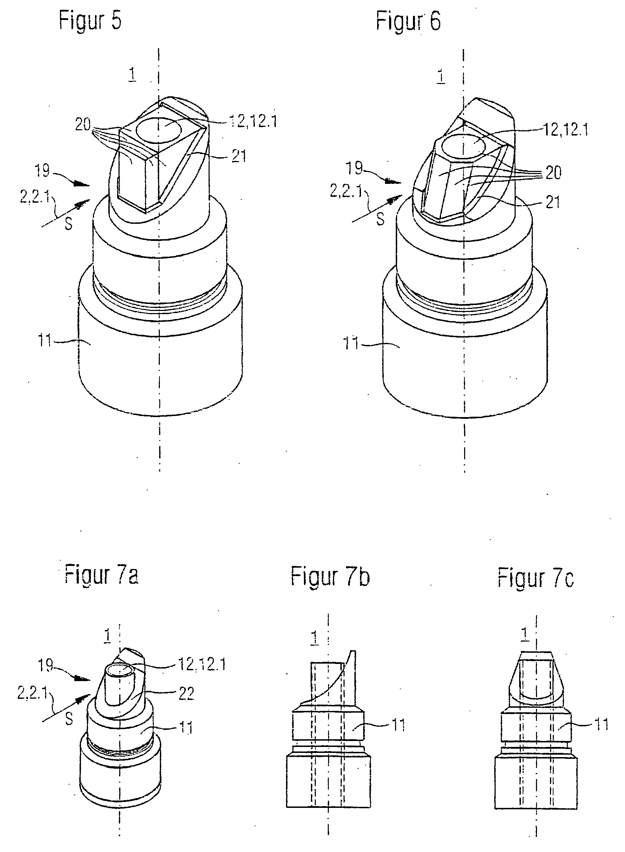

Die Figur 5 zeigt eine schematische Perspektivdarstellung eines unteren Bereichs 19 einer alternativen Ausführungsform des Nockens 11 für das erfindungsgemäße Ventil 1 (vgl. Figuren 1 und 2).

Auch dieser dargestellte Nocken 11 besitzt zentral die Führungsöffnung 12, insbesondere Führungsbohrung 12.1. Außenseitig weist der in den Hohlraum 4 des Hohlkörpers 3 zumindest bereichsweise hineinragende und ortsfest in dem Hohlkörper 3 gelagerte Nocken 11 (vgl. Figuren 1 bis 3) erneut mehrere vorzugsweise planare Anströmflächen 20 auf, die gegebenenfalls mittels Rundungen und/oder Fasen 21 ineinander über gehen können. Die vorzugsweise planaren Anströmflächen 20 sind nicht senkrecht zu der Strömungsrichtung S (Pfeil) des Fluidstroms 2 (Pfeil), insbesondere Faserstoffsuspensionsstroms 2.1 (Pfeil) ausgerichtet.

Die Figur 6 zeigt eine schematische Perspektivdarstellung eines unteren Bereichs 19 einer weiteren alternativen Ausführungsform des Nockens 11 für das erfindungsgemäße Ventil 1 (vgl. Figuren 1 und 2).

Der Nocken 11 besitzt wiederum zentral die Führungsöffnung 12, insbesondere Führungsbohrung 12.1. Außenseitig weist der in den Hohlraum 4 des Hohlkörpers 3 zumindest bereichsweise hineinragende und ortsfest in dem Hohlkörper 3 gelagerte Nocken 11 (vgl. Figuren 1 bis 3) mehrere vorzugsweise planare Anströmflächen 20 auf, die gegebenenfalls mittels Rundungen und/oder Fasen 21 ineinander über gehen können. Die vorzugsweise planaren Anströmflächen 20 sind nicht senkrecht zu der Strömungsrichtung S (Pfeil) des Fluidstroms 2, insbesondere Faserstoffsuspensionsstroms 2.1 ausgerichtet.

Die Figur 7a zeigt eine schematische Perspektivdarstellung eines unteren Bereichs 19 einer dritten alternativen Ausführungsform des Nockens 11 für das erfindungsgemäße Ventil 1 (vgl. Figuren 1 und 2).

Der Nocken 11 ist einlassseitig mit einer einfache Schräge 22 versehen, die in Strömungsrichtung S (Pfeil) des Fluidstrom 2, insbesondere Faserstoffsuspensionsstroms 2.1 entweder gerade oder nach innen gekrümmt (Darstellung) verläuft.

Die zentral angeordnete Führungsöffnung 12, insbesondere Führungsbohrung 12.1 des Nockens 11 ragt aus dem Grundteil heraus und ist außenseitig zylinderförmig (Darstellung) oder kegelförmig ausgebildet.

Die beiden Figuren 7b und 7c zeigen zwei schematische Seitenansichten der dritten alternativen Ausführungsform des Nockens 11 für das erfindungsgemäße Ventil 1 (vgl. Figuren 1 und 2), wobei auf die Figurenbeschreibung 7a verwiesen wird.

Die Figur 8 zeigt eine schematische Schnittdarstellung durch einen bekannten sektionierten Verdünnungswasser-Stoffauflauf 100, der eine Vielzahl von zueinander beabstandeten erfindungsgemäßen Ventilen 1 umfasst.

Der dargestellte Verdünnungswasser-Stoffauflauf 100 ist Bestandteil einer nicht weiters dargestellten, dem Fachmann jedoch bekannten Maschine 200 zur Herstellung einer Faserstoffbahn, insbesondere einer Papier-, Karton- oder Verpackungspapierbahn, aus wenigstens einer Faserstoffsuspension. Er umfasst eine wenigstens eine Faserstoffsuspension 101 zuführenden Zuführvorrichtung 102 und ein Turbulenzerzeugungsmittel 103, in welchem beim Betrieb des Verdünnungswasser-Stoffauflaufs 100 die wenigstens eine Faserstoffsuspension 101 durch eine Vielzahl von in Zeilen und in Spalten angeordneten Strömungskanälen 104 strömt, dadurch in eine Strömungsrichtung aufweisende Faserstoffsuspensionsteilströme aufgeteilt und nach dem Austritt aus dem Turbulenzerzeugungsmittel 103 in einer vorzugsweise maschinenbreiten Kammer 105 wieder zusammengeführt wird.

Stromaufwärts des Turbulenzerzeugungsmittels 103 sind mehrere eine jeweilige Längsrichtung aufweisende und in Breitenrichtung des Stoffauflaufs zueinander beabstandete Mittel 106 zur vorzugsweise regel-/steuerbaren Zudosierung von einem Fluid 2 in Fluidteilströmen 2.T in die wenigstens eine Faserstoffsuspension 101 vorgesehen. Hinsichtlich der konstruktiven und funktionalen Ausgestaltung der Mittel wird auf die nachfolgenden acht deutschen Patentanmeldungen des Anmelders verwiesen.
1. DE 10 2008 054 893.6 vom 18.12.2008:
   HPA14251 DE - "MJ II-3-Spalten";
2. DE 10 2008 054 894.4 vom 18.12.2008:
   HPA14252 DE - "MJ II-EdgeModule";
3. DE 10 2008 054 896.0 vom 18.12.2008:
   HPA14253 DE - "MJ II-Druckverlustverteilung";
4. DE 10 2008 054 897.9 vom 18.12.2008:
   HPA14263 DE - "MJ II-Schichtenlose Hilfsstoffzugabe";
5. DE 10 2008 054 898.7 vom 18.12.2008:
   HPA14265 DE - "MJ II-DoS-TE-Geometrie";
6. DE 10 2008 054 899.5 vom 18.12.2008:
   HPA14310 DE - "MJ II-Verteilrohrlochplattendicke";
7. DE 10 2009 027 013.2 vom 18.06.2009:
   HPA14466 DE - "MJ II-W-STA"; und
8. DE 10 2009 027 721.8 vom 15.07.2009:
   HPA14569 DE - "MJ II-W-STA (Dosierrohr)".

Der dargestellte Verdünnungswasser-Stoffauflauf 100 weist bevorzugt eine Teilungsbreite T (Sektionsbreite) der Mittel 106 von N · 25 mm oder N · 33,3 mm auf, wobei N eine natürliche Zahl ist.

Das erfindungsgemäße Ventil 1 dient also zum Regulieren des Fluidstroms 2, insbesondere des Fluidteilstroms 2.T. In dargestellter Ausführung ist der Fluidstrom 2, insbesondere Faserstoffsuspensionsstrom 2.1 ein Verdünnungswasser-Strom bzw. Siebwasser-Strom, der Anteile an Feststoffen einer Faserstoffsuspension enthält.

Zusammenfassend ist festzuhalten, dass durch die Erfindung ein Ventil der eingangs genannten Arten geschaffen wird, welches die genannten Nachteile des Stands der Technik weitestgehend reduziert, vorzugsweise sogar gänzlich vermeidet. Insbesondere ist der Druckverlust in dem Fluidstrom, insbesondere Faserstoffsuspensionsstrom möglichst gering und lokale Faseranhäufungen, Faserwischbildungen, Ablagerungen und dergleichen werden weitestgehend, vorzugsweise gänzlich vermieden.

### Bezugszeichenliste

- 1: Ventil
- 2: Fluidstrom
- 2.1: Faserstoffsuspensionsstrom
- 2.T: Fluidteilstrom
- 3: Hohlkörper
- 4: Hohlraum
- 5: Einlassöffnung
- 5.1: Einlasskanal
- 6: Durchtrittsfläche
- 6.1: Konfusor
- 7: Auslassöffnung
- 7.1: Auslasskanal
- 8: Ventilstange
- 8.1: Bereich der Ventilstange
- 8.n: Bereich (Ventilstange)
- 9: Ventilteller
- 10: Betätigungsmittel
- 11: Nocken
- 12: Führungsöffnung
- 12.1: Führungsbohrung
- 13: Übergangsbereich
- 14: Bereich
- 15: Endbereich (Konfusor)
- 16: Bereich
- 17: Diffusor
- 18: Drossel
- 19: Unterer Bereich
- 20: Anströmfläche
- 21: Rundung und/oder Fase
- 22: Schräge
- 100: (Verdünnungswasser-)Stoffauflauf
- 101: Faserstoffsuspension
- 102: Zuführvorrichtung
- 103: Turbulenzerzeugungsmittel
- 104: Strömungskanal
- 105: Kammer
- 106: Mittel
- 200: Maschine zur Herstellung einer Faserstoffbahn

- B: Strömungsbreite
- B.11: Nockenbreite
- D.5: Durchmesser (Einlassöffnung)
- D.9: Durchmesser (Ventilteller)
- D.14: Durchmesser (Bereich)
- D.16: Durchmesser (Endbereich des Konfusor - Bereich)
- H: Strömungshauptrichtung (Pfeil)
- K.8.n: Außenkontur (Ventilstange)
- L.4: Längsachse (Hohlraum)
- L.5: Längsachse (Einlassöffnung)
- L.6.1: Länge (Konfusor, Durchtrittsfläche)
- L.14: Länge (Bereich)
- L.16: Länge (Bereich)
- L.17: Länge (Diffusor)
- M: Mittensenkrechte (Einlassöffnung)
- P: Schnittpunkt
- Qₜ: Theoretischer örtlicher offener Strömungsquerschnitt
- Qᵥ: Vorhandener örtlicher offener Strömungsquerschnitt
- S: Strömungsrichtung (Pfeil)
- S.18: Mindestspalt
- T: Teilungsbreite (Sektionsbreite)
- V: Verschiebung (Doppelpfeil)
- V.18: Mindestvolumenstrom
- X: Ansichtspfeil

- α: Schnittwinkel
- β: Übergangswinkel (Übergangsbereich)
- γ: Winkel (Konfusor, Durchtrittsfläche)
- δ: Winkel (Diffusor)

## Patentansprüche

1. Ventil (1) zum Regulieren eines Fluidstroms (2), insbesondere eines vorzugsweise in einer Maschine zur Herstellung einer Faserstoffbahn, insbesondere einer Papier-, Karton- oder Verpackungspapierbahn, geführten Faserstoffsuspensionsstroms (2.1), umfassend einen Hohlkörper (3) mit einem im Wesentlichen zumindest streckenweise rotationssymmetrischen und eine Längsachse (L.4) aufweisenden Hohlraum (4), der zumindest eine, eine Längsachse (L.5) aufweisende Einlassöffnung (5) mit einem Einlasskanal (5.1), eine veränderbare und im Wesentlichen rotationssymmetrische Durchtrittsfläche (6) und eine Auslassöffnung (7) mit einem Auslasskanal (7.1) aufweist, und eine vorzugsweise mittels wenigstens eines Betätigungsmittels (10) koaxial in dem Hohlraum (4) des Hohlkörpers (3) verschiebbare, die Durchtrittsfläche (6) infolge einer Verschiebung (V) veränderbare, insbesondere ein Ventilteller (9) aufweisende und vorzugsweise rotationssymmetrische Ventilstange (8), wobei
die Einlassöffnung (5) in dem Hohlkörper (3) derart angeordnet ist, dass deren Längsachse (L.5) sich mit der Längsachse (L.4) des Hohlraums (4) des Hohlkörpers (3) in einem Schnittpunkt (P) schneidet, und dass der Hohlraum (4) des Hohlkörpers (3) derart ausgebildet ist, dass der eine Strömungshauptrichtung (H) aufweisende Fluidstrom (2), insbesondere Faserstoffsuspensionsstrom (2.1) staupunktsfrei oder annähernd staupunktsfrei und rotationsfrei oder annähernd rotationsfrei in Bezug auf die Längsachse (L.4) des Hohlraums (4) durch ihn strömt,
**dadurch gekennzeichnet,**
**dass** die vorzugsweise rotationssymmetrische Ventilstange (8) mittels eines eine Führungsöffnung (12), insbesondere Führungsbohrung - (12.1) aufweisenden Nockens (11) in den Hohlraum (4) des Hohlkörpers (3) hineingeführt ist.

2. Ventil (1) nach Anspruch 1,
**dadurch gekennzeichnet,**
**dass** die beiden sich in dem Schnittpunkt (P) schneidenden Längsachsen (L.5, L.4) einen Schnittwinkel (α) im Bereich von 60 bis 120°, vorzugsweise von 80 bis 100°, insbesondere von 85 bis 95° aufweisen.

3. Ventil (1) nach Anspruch 1 oder 2,
**dadurch gekennzeichnet,**
**dass** zumindest der Hohlraum (4) des Hohlkörpers (3) frei von senkrecht zu der Strömungshauptrichtung (H) des Fluidstroms (2), insbesondere Faserstoffsuspensionsstroms (2.1) liegenden Flächen und/oder Kanten ist.

4. Ventil (1) nach Anspruch 1,
**dadurch gekennzeichnet,**
**dass** der in den Hohlraum (4) des Hohlkörpers (3) zumindest bereichsweise hineinragende Nocken (11) derart dimensioniert und angeordnet ist, dass er den vorhandenen örtlichen offenen Strömungsquerschnitt (Qᵥ) im Vergleich mit dem theoretischen örtlichen offenen Strömungsquerschnitt (Qₜ) um maximal 60 %, vorzugsweise um maximal 50 %, insbesondere um maximal 40 % verkleinert.

5. Ventil (1) nach Anspruch 4 oder 1,
**dadurch gekennzeichnet,**
**dass** der in den Hohlraum (4) des Hohlkörpers (3) zumindest bereichsweise hineinragende Nocken (11) mehrere vorzugsweise planare Anströmflächen (20) aufweist, die nicht senkrecht zu der Strömungsrichtung (S) des Fluidstroms (2), insbesondere Faserstoffsuspensionsstroms (2.1) ausgerichtet sind und/oder die zumindest bereichsweise mit Fasen und/oder Radien (21) versehen sind.

6. Ventil (1) nach Anspruch 1, 4 oder 5,
**dadurch gekennzeichnet,**
**dass** der in den Hohlraum (4) des Hohlkörpers (3) zumindest bereichsweise hineinragende Nocken (11) eine Nockenbreite (B.11) im Bereich von 20 bis 80 %, vorzugsweise von 25 bis 70 %, insbesondere von 30 bis 60 % der vorhandenen örtlichen Strömungsbreite (B) des Fluidstroms (2), insbesondere Faserstoffsuspensionsstroms (2.1) aufweist.

7. Ventil (1) nach einem der vorhergehenden Ansprüche,
**dadurch gekennzeichnet,**
**dass** die in Strömungsrichtung (S) des Fluidstroms (2), insbesondere Faserstoffsuspensionsstroms (2.1) geordneten Bereiche des Hohlraums (4) des Hohlkörpers (3) zumindest eine der folgenden Eigenschaften aufweisen:
- die eine Längsachse (L.5) aufweisende Einlassöffnung (5) weist einen Durchmesser (D.5) im Bereich von 10 bis 60 mm, vorzugsweise von 15 bis 50 mm, auf;
- ein Übergangsbereich (13) weist einen Übergangswinkel (β) im Bereich von 60 bis 120°, vorzugsweise von 80 bis 100°, insbesondere von 85 bis 95° auf;
- ein zylindrischer oder annähernd zylindrischer Bereich (14) weist einen Durchmesser (D.14) im Bereich von 10 bis 60 mm, vorzugsweise von 15 bis 50 mm, und eine Länge (L.14) im Bereich von 0,1 bis 50 mm, vorzugsweise von 0,1 bis 20 mm, auf;
- die veränderbare und im Wesentlichen rotationssymmetrische Durchtrittsfläche (6) ist ein Konfusor (6.1), der eine Länge (L.6.1) im Bereich von 10 bis 100 mm, vorzugsweise von 20 bis 50 mm, und einen Winkel (y) von 60 bis 90°, vorzugsweise von 70 bis 80°, aufweist;
- der Endbereich (15) des Konfusors (6.1) und ein zylindrischer oder annähernd zylindrischer Bereich (16) weisen einen Durchmesser (D.16) im Bereich von 5 bis 30 mm, vorzugsweise von 10 bis 20 mm, auf, wobei der zylindrische oder annähernd zylindrische Bereich (16) zudem eine Länge (L.16) von 0,1 bis 50 mm, vorzugsweise von 2 bis 20 mm, aufweist; und/oder
- ein Diffusor (17) weist eine Länge (L.17) im Bereich von 10 bis 100 mm, vorzugsweise von 20 bis 50 mm, und einem Winkel (δ) von 60 bis 90°, vorzugsweise von 70 bis 80°, auf.

8. Ventil (1) nach einem der vorhergehenden Ansprüche,
**dadurch gekennzeichnet,**
**dass** der Ventilteller (9) der vorzugsweise rotationssymmetrischen Ventilstange (8) einen kleineren Durchmesser (D.9) als der Endbereich (15) des Konfusors (6.1) und des zylindrischen oder annähernd zylindrischen Bereichs (16) aufweist, so dass eine variable Drossel (18) ausgebildet wird, die fortwährend einen Mindestspalt (S.18) im Bereich von 0,5 bis 1,5 mm, vorzugsweise von 0,5 bis 1,0 mm, insbesondere von etwa 0,75 mm aufweist und damit im Betrieb des Ventils (1) immer einen Mindestvolumenstrom (V.18) besitzt.

9. Ventil (1) nach einem der vorhergehenden Ansprüche,
**dadurch gekennzeichnet,**
**dass** der in den Hohlraum (4) des Hohlkörpers (3) zumindest bereichsweise hineinragende Bereich (8.1) der vorzugsweise rotationssymmetrischen Ventilstange (8) frei von senkrecht zu der Strömungshauptrichtung (H) des Fluidstroms (2), insbesondere Faserstoffsuspensionsstroms (2.1) liegenden Flächen ist.

10. Ventil (1) nach einem der vorhergehenden Ansprüche,
**dadurch gekennzeichnet,**
**dass** der in den Hohlraum (4) des Hohlkörpers (3) zumindest bereichsweise hineinragende Bereich (8.1) der vorzugsweise rotationssymmetrischen Ventilstange (8) mehrere Bereiche (8.n) mit unterschiedlichen konstanten, konvergierenden oder divergierenden Außenkonturen (K.8.n) aufweist.

11. Ventil (1) nach einem der vorhergehenden Ansprüche,
**dadurch gekennzeichnet,**
**dass** der zu regulierende Fluidstrom (2, 2.1), insbesondere Fluidteilstrom (2.T) ein Verdünnungswasser-Strom bzw. Siebwasser-Strom ist, der Anteile an Feststoffen einer Faserstoffsuspension enthält.

12. Stoffauflauf (100) für eine Maschine (200) zur Herstellung einer Faserstoffbahn, insbesondere einer Papier-, Karton- oder Verpackungspapierbahn, aus wenigstens einer Faserstoffsuspension (101),
**dadurch gekennzeichnet,**
**dass** er wenigstens ein Ventil (1) nach einem der Ansprüche 1 bis 11 umfasst.

13. Stoffauflauf (100) nach Anspruch 12,
**dadurch gekennzeichnet,**
**dass** er als ein sektionierter Verdünnungswasser-Stoffauflaüf (100) mit einer Teilungsbreite (T) von N · 25 mm oder N · 33,3 mm ausgebildet ist, wobei N eine natürliche Zahl ist, und dass in mindestens einer, vorzugsweise in jeder Verdünnungswasser-Leitung wenigstens ein Ventil (1) nach einem der Ansprüche 1 bis 11 angeordnet ist.

14. Maschine (200) zur Herstellung einer Faserstoffbahn, insbesondere einer Papier-, Karton- oder Verpackungspapierbahn, aus wenigstens einer Faserstoffsuspension (101),
**dadurch gekennzeichnet,**
**dass** sie wenigstens ein Ventil (1) nach einem der Ansprüche 1 bis 11 umfasst.

## Claims

1. Valve (1) for regulating a fluid flow (2), in particular of a fibrous suspension stream (2.1) preferably guided in a machine for producing a fibrous web, in particular a paper, board or packaging paper web, comprising a hollow body (3) with a substantially at least partially rotationally symmetrical cavity (4) having a longitudinal axis (L.4), which has at least one inlet opening (5) having a longitudinal axis (L.5) and an inlet channel (5.1), a variable and substantially rotationally symmetrical passage area (6) and an outlet opening (7) with an outlet channel (7.1), and a valve rod (8) which is coaxially displaceable in the cavity (4) of the hollow body (3), preferably by means of at least one actuating means (10), which can vary the passage area (6) as a result of a displacement (V), in particular has a valve disc (9) and is preferably rotationally symmetrical,
the inlet opening (5) being arranged in the hollow body (3) in such a way that its longitudinal axis (L.5) intersects the longitudinal axis (L.4) of the cavity (4) of the hollow body (3) at a point of intersection (P), and that the cavity (4) of the hollow body (3) is formed in such a way that the fluid flow (2) having a main flow direction (H), in particular fibrous suspension stream (2.1), flows through the cavity (4) without any stagnation point or approximately without any stagnation point and free of rotation or approximately free of rotation in relation to the longitudinal axis (L.4) of the said cavity (4),
**characterized in that**
the preferably rotationally symmetrical valve rod (8) is guided into the cavity (4) of the hollow body (3) by means of a cam (11) having a guide opening (12), in particular a guide bore (12.1).

2. Valve (1) according to Claim 1,
**characterized in that**
the two longitudinal axes (L.5, L.4) intersecting at the point of intersection (P) have an angle of intersection (α) in the range from 60 to 120°, preferably from 80 to 100°, in particular from 85 to 95°.

3. Valve (1) according to Claim 1 or 2,
**characterized in that**
at least the cavity (4) of the hollow body (3) is free of surfaces and/or edges located at right angles to the main flow direction (H) of the fluid flow (2), in particular fibrous suspension stream (2.1).

4. Valve (1) according to Claim 1,
**characterized in that**
the cam (11) projecting at least partly into the cavity (4) of the hollow body (3) is dimensioned and arranged in such a way that it reduces the local open flow cross section (Qᵥ) that is present by a maximum of 60%, preferably by a maximum of 50%, in particular by a maximum of 40%, as compared with the theoretical local open flow cross section (Qₜ).

5. Valve (1) according to Claim 4 or 1,
**characterized in that**
the cam (11) projecting at least partly into the cavity (4) of the hollow body (3) has a plurality of preferably planar incident flow surfaces (20) which are not aligned at right angles to the flow direction (S) of the fluid flow (2), in particular fibrous suspension stream (2.1), and/or which are provided with chamfers and/or radii (21), at least in some areas.

6. Valve (1) according to Claim 1, 4 or 5,
**characterized in that**
the cam (11) projecting at least partly into the cavity (4) of the hollow body (3) has a cam width (B.11) in the range from 20 to 80%, preferably from 25 to 70%, in particular from 30 to 60%, of the local flow width (B) of the fluid flow (2), in particular the fibrous suspension stream (2.1), that is present there.

7. Valve (1) according to one of the preceding claims,
**characterized in that**
the regions of the cavity (4) of the hollow body (3) that are arranged in the flow direction (S) of the fluid flow (2), in particular the fibrous suspension stream (2.1), have at least one of the following characteristics:
- the inlet opening (5) having a longitudinal axis (L.5) has a diameter (D.5) in the range from 10 to 60 mm, preferably from 15 to 50 mm;
- a transition region (13) has a transition angle (β) in the range from 60 to 120°, preferably from 80 to 100°, in particular from 85 to 95°;
- a cylindrical or approximately cylindrical region (14) has a diameter (D.14) in the range from 10 to 60 mm, preferably from 15 to 50 mm, and a length (L.14) in the range from 0.1 to 50 mm, preferably from 0.1 to 20 mm;
- the variable and substantially rotationally symmetrical passage area (6) is a reducer (6.1), which has a length (L.6.1) in the range from 10 to 100 mm, preferably from 20 to 50 mm, and an angle (γ) of 60 to 90°, preferably of 70 to 80°;
- the end region (15) of the reducer (6.1) and a cylindrical or approximately cylindrical region (16) have a diameter (D.16) in the range from 5 to 30 mm, preferably from 10 to 20 mm, the cylindrical or approximately cylindrical region (16) additionally having a length (L.16) of 0.1 to 50 mm, preferably of 2 to 20 mm; and/or
- a diffuser (17) has a length (L.17) in the range from 10 to 100 mm, preferably from 20 to 50 mm, and an angle (δ) of 60 to 90°, preferably of 70 to 80°.

8. Valve (1) according to one of the preceding claims,
**characterized in that**
the valve disc (9) of the preferably rotationally symmetrical valve rod (8) has a smaller diameter (D.9) than the end region (15) of the reducer (6.1) and of the cylindrical or approximately cylindrical region (16), so that a variable throttle (18) is formed which continuously has a minimum gap (5.18) in the range from 0.5 to 1.5 mm, preferably from 0.5 to 1.0 mm, in particular of about 0.75 mm, and therefore always has a minimum volume flow (V.18) during operation of the valve (1).

9. Valve (1) according to one of the preceding claims,
**characterized in that**
that region (8.1) of the preferably rotationally symmetrical valve rod (8) which projects at least partly into the cavity (4) of the hollow body (3) is free of surfaces located at right angles to the main flow direction (H) of the fluid flow (2), in particular the fibrous suspension stream (2.1).

10. Valve (1) according to one of the preceding claims,
**characterized in that**
that region (8.1) of the preferably rotationally symmetrical valve rod (8) which projects at least partly into the cavity (4) of the hollow body (3) has a plurality of regions (8.n) with different constant, convergent or divergent outer contours (K.8.n).

11. Valve (1) according to one of the preceding claims,
**characterized in that**
the fluid flow (2, 2.1), in particular partial fluid flow (2.T), to be regulated, is a dilution water stream or white water stream which contains proportions of solids from a fibrous suspension.

12. Headbox (100) for a machine (200) for producing a fibrous web, in particular a paper, board or packaging paper web, from at least one fibrous suspension (101),
**characterized in that**
it comprises at least one valve (1) according to one of Claims 1 to 11.

13. Headbox (100) according to Claim 12,
**characterized in that**
it is constructed as a sectional dilution water headbox (100) having a partition width (T) of N·25 mm or N·33.3 mm, where N is a natural number, and **in that** at least one valve (1) according to one of Claims 1 to 11 is arranged in at least one, preferably in each, dilution water line.

14. Machine (200) for producing a fibrous web, in particular a paper, board or packaging paper web, from at least one fibrous suspension (101),
**characterized in that**
it comprises at least one valve (1) according to one of Claims 1 to 11.

## Revendications

1. Soupape (1) pour la régulation d'un flux de fluide (2), en particulier d'un flux de suspension de matière fibreuse (2.1) guidé de préférence dans une machine pour la fabrication d'une bande de matière fibreuse, en particulier d'une bande de papier, de carton ou de papier d'emballage, comprenant un corps creux (3) avec une cavité (4) présentant essentiellement au moins par sections la symétrie de rotation ainsi qu'un axe longitudinal (L.4), laquelle présente au moins une ouverture d'entrée (5) présentant un axe longitudinal (L.5) avec un canal d'entrée (5.1), une surface de passage variable et essentiellement symétrique en rotation (6) et une ouverture de sortie (7) avec un canal de sortie (7.1), et une tige de soupape (8) déplaçable de préférence au moyen d'au moins un moyen d'actionnement (10) coaxialement dans la cavité (4) du corps creux (3), pouvant changer la surface de passage (6) par suite d'un déplacement (V), présentant en particulier une tête de soupape (9) et de préférence symétrique en rotation, dans laquelle l'ouverture d'entrée (5) est disposée dans le corps creux (3), de telle manière que son axe longitudinal (L.5) coupe l'axe longitudinal (L.4) de la cavité (4) du corps creux (3) en un point d'intersection (P), et la cavité (4) du corps creux (3) est configurée de telle manière que le flux de fluide (2), en particulier le flux de suspension de matière fibreuse (2.1), présentant une direction principale d'écoulement (H) s'écoule à travers elle sans point d'accumulation ou pratiquement sans point d'accumulation et sans rotation ou pratiquement sans rotation par rapport à l'axe longitudinal (L.4) de la cavité (4), **caractérisée en ce que** la tige de soupape (8) de préférence symétrique en rotation est introduite dans la cavité (4) du corps creux (3) au moyen d'une came (11) présentant une ouverture de guidage (12), en particulier un alésage de guidage (12.1).

2. Soupape (1) selon la revendication 1, **caractérisée en ce que** les deux axes longitudinaux (L.5, L.4) se coupant au point d'intersection (P) présentent un angle d'intersection (α) dans la plage de 60 à 120°, de préférence de 80 à 100°, en particulier de 85 à 95°.

3. Soupape (1) selon la revendication 1 ou 2, **caractérisée en ce qu'**au moins la cavité (4) du corps creux (3) est exempte de faces et/ou d'arêtes situées perpendiculairement à la direction principale d'écoulement (H) du flux de fluide (2), en particulier du flux de suspension de matière fibreuse (2.1).

4. Soupape (1) selon la revendication 1, **caractérisée en ce que** la came (11) pénétrant au moins localement dans la cavité (4) du corps creux (3) est dimensionnée et disposée de telle manière qu'elle réduise la section transversale d'écoulement locale ouverte existante (Qᵥ) par rapport à la section transversale d'écoulement locale ouverte théorique (Qₜ) au maximum de 60 %, de préférence au maximum de 50 %, en particulier au maximum de 40 %.

5. Soupape (1) selon la revendication 4 ou 1, **caractérisée en ce que** la came (11) pénétrant au moins localement dans la cavité (4) du corps creux (3) présente plusieurs faces d'impact de préférence planes (20), qui ne sont pas orientées perpendiculairement à la direction d'écoulement (S) du flux de fluide (2), en particulier du flux de suspension de matière fibreuse (2.1), et/ou qui sont dotées au moins localement de chanfreins et/ou de rayons (21).

6. Soupape (1) selon la revendication 1, 4 ou 5, **caractérisée en ce que** la came (11) pénétrant au moins localement dans la cavité (4) du corps creux (3) présente une largeur de came (B.11) dans la plage de 20 à 80 %, de préférence de 25 à 70 %, en particulier de 30 à 60 % de la largeur d'écoulement locale existante (B) du flux de fluide (2), en particulier du flux de suspension de matière fibreuse (2.1).

7. Soupape (1) selon l'une quelconque des revendications précédentes, **caractérisée en ce que** les régions de la cavité (4) du corps creux (3) rangées dans la direction d'écoulement (S) du flux de fluide (2), en particulier du flux de suspension de matière fibreuse (2.1), présentent au moins une des propriétés suivantes:
- l'ouverture d'entrée (5) présentant un axe longitudinal (L.5) présente un diamètre (D.5) dans la plage de 10 à 60 mm, de préférence de 15 à 50 mm;
- une région de transition (13) présente un angle de transition (β) dans la plage de 60 à 120°, de préférence de 80 à 100°, en particulier de 85 à 95°;
- une région cylindrique ou pratiquement cylindrique (14) présente un diamètre (D.14) dans la plage de 10 à 60 mm, de préférence de 15 à 50 mm, et une longueur (L.14) dans la plage de 0,1 à 50 mm, de préférence de 0,1 à 20 mm;
- la surface de passage variable et essentiellement symétrique en rotation (6) est un convergeur (6.1), qui présente une longueur (L.6.1) dans la plage de 10 à 100 mm, de préférence de 20 à 50 mm, et un angle (γ) de 60 à 90°, de préférence de 70 à 80°;
- la région d'extrémité (15) du convergeur (6.1) et une région cylindrique ou pratiquement cylindrique (16) présentent un diamètre (D.16) dans la plage de 5 à 30 mm, de préférence de 10 à 20 mm, dans laquelle la région cylindrique ou pratiquement cylindrique (16) présente en outre une longueur (L.16) de 0,1 à 50 mm, de préférence de 2 à 20 mm; et/ou
- un diffuseur (17) présente une longueur (L.17) dans la plage de 10 à 100 mm, de préférence de 20 à 50 mm, et un angle (δ) de 60 à 90°, de préférence de 70 à 80°.

8. Soupape (1) selon l'une quelconque des revendications précédentes, **caractérisée en ce que** la tête de soupape (9) de la tige de soupape de préférence symétrique en rotation (8) présente un plus petit diamètre (D.9) que la région d'extrémité (15) du convergeur (6.1) et de la région cylindrique ou pratiquement cylindrique (16), de telle manière qu'il se forme un étranglement variable (18), qui présente en continu une fente minimale (S.18) dans la plage de 0,5 à 1,5 mm, de préférence de 0,5 à 1,0 mm, en particulier d'environ 0,75 mm et possède ainsi en cours de fonctionnement de la soupape (1) toujours un flux volumique minimal (V.18).

9. Soupape (1) selon l'une quelconque des revendications précédentes, **caractérisée en ce que** la région (8.1) de la tige de soupape de préférence symétrique en rotation (8) pénétrant au moins localement dans la cavité (4) du corps creux (3) est exempte de faces situées perpendiculairement à la direction principale d'écoulement (H) du flux de fluide (2), en particulier du flux de suspension de matière fibreuse (2.1).

10. Soupape (1) selon l'une quelconque des revendications précédentes, **caractérisée en ce que** la région (8.1) de la tige de soupape de préférence symétrique en rotation (8) pénétrant au moins localement dans la cavité (4) du corps creux (3) présente plusieurs régions (8.n) présentant des contours extérieurs constants, convergents ou divergents différents (K.8.n).

11. Soupape (1) selon l'une quelconque des revendications précédentes, **caractérisée en ce que** le flux de fluide à réguler (2, 2.1), en particulier le flux partiel de fluide (2.T), est un flux d'eau de dilution ou un flux d'eau blanche, qui contient des parties de substances solides d'une suspension de matière fibreuse.

12. Caisse de tête (100) pour une machine (200) pour la fabrication d'une bande de matière fibreuse, en particulier d'une bande de papier, de carton ou de papier d'emballage, à partir d'au moins une suspension de matière fibreuse (101), **caractérisée en ce qu'**elle comprend au moins une soupape (1) selon l'une quelconque des revendications 1 à 11.

13. Caisse de tête (100) selon la revendication 12, **caractérisée en ce qu'**elle est réalisée sous forme de caisse de tête sectionnée pour eau de dilution (100) avec une largeur de pas (T) de N·25 mm ou N·33,3 mm, dans laquelle N est un nombre naturel, et **en ce qu'**au moins une soupape (1) selon l'une quelconque des revendications 1 à 11 est disposée dans au moins une, de préférence dans chaque conduite d'eau de dilution.

14. Machine (200) pour la fabrication d'une bande de matière fibreuse, en particulier d'une bande de papier, de carton ou de papier d'emballage, à partir d'au moins une suspension de matière fibreuse (101), **caractérisée en ce qu'**elle comprend au moins une soupape (1) selon l'une quelconque des revendications 1 à 11.
